# EUROPEAN PATENT SPECIFICATION

(11) **EP 4 054 313 B1**
(45) Date of publication and mention of the grant of the patent: **30.07.2025**
(21) Application number: 19835317.9
(22) Date of filing: 08.11.2019
(51) Int. Cl.: A01D 78/00, A01D 78/04

(54) **AGRICULTURAL RAKING MACHINE**
LANDWIRTSCHAFTLICHE RECHMASCHINE
MACHINE AGRICOLE ANDAINEUSE

(43) Date of publication of application: 14.09.2022
(73) Proprietor: Sitrex S.p.a., 06018 Città di Castello (PG) (IT)
(72) Inventor: MORTARO, Matteo, 06018 Citta' di Castello (PG) (IT); ROSSI, Pablo, 06018 Citta' di Castello (PG) (IT)
(74) Representative: Papa, Elisabetta
(86) International application number: PCT/IT2019/000094
(87) International publication number: WO 2021/090342

(56) References cited:
- EP-A1- 1 992 215
- WO-A1-2012/110743
- WO-A1-2015/091058
- US-A- 5 493 853
- US-A1- 2002 157 372

## Description

### Technical field of the invention

The present invention relates to an agricultural raking machine.

### Background

The agricultural raking machines, also called rakes or swath rakes, are used to collect in windrows the mowing or forage material or other residual material deriving from the activities of haymaking and/or the like.

The known raking machines are provided with a frame which can be towed by a vehicle, for example a tractor, along a forwarding direction. The frame carries a raking group usually equipped with one or more rotary combs. In use, the raking group is usually positioned along a direction tilted towards the forwarding direction. The combs, when they are put into rotation, act on the material on the ground by pushing it along the forwarding direction so as to accumulate it to form a strip of longitudinal material called windrow.

The formation of the windrows is very important for haymaking since it affects directly the collection of the material to be kept, both in quantity and quality terms.

A correct raking or swathing of the material on the ground provides for collecting as much quantity as possible of material scattered onto the ground and forming a windrow having sufficient material density along its length with the purpose of easing and performing a correct harvest by means of baling machines or the like.

In order to collect as much quantity of material as possible, the combs have to stay as close to the ground as possible, however by avoiding to touch it. Such task is difficult to be performed since the grounds are often uneven, with continuous variations in slopes, presence of bumps and various obstacles. The frame of the known raking machines, by passing on rough terrains, swings by raising and lowering the combs which, in contact to the ground or the obstacles existing thereon, inevitably wear out or break. Moreover, such swinging makes the distance from the ground of the combs to vary and, consequently, the amount of material moved by the combs along the forwarding direction. In fact, in the points wherein the distance between the combs and the ground is larger, the amount of moved material is smaller, and vice versa, and the windrow which is going to be formed will have different material density along the development thereof.

Such drawbacks are more evident in the double raking machines, that is provided with two raking groups which, in use, are arranged tilted therebetween diverging with respect to the forwarding direction of the tractor.

In fact, apart from the already mentioned drawbacks, in this case there is the additional drawback linked to the fact that, in presence of rough terrains, a raking group may be working at a different height with respect to the other one.

WO2015091058A1 relates to agricultural forage windrowers and particularly rakes with two or more rotors that rotate about respective vertical axes and support a plurality of tines.

### Summary of the invention

The technical problem placed and solved by the present invention is then to provide an agricultural raking machine allowing to obviate the drawbacks mentioned above with reference to known art.

Such problem is solved by an agricultural raking machine according to claim 1.

Preferred features of the present invention are set forth in the depending claims.

The present invention provides some relevant advantages. The main advantage consists in that the agricultural machine of the present invention can adapt to the unevennesses of the ground when it moves along a forwarding direction.

In this way the combs are kept at a substantially constant distance from the ground even in presence of bumps, obstacles or variations in slope, to the advantage of the amount of collected material and the integrity of the combs.

Another advantage relates to the structural simplicity. The devised machine, in fact, does not require particular structural devices and it can be easily connected to the hydraulic drawing vehicles of the tractors currently on the market or of other known vehicles.

The machine of the present invention and, in particular, the flotation means, can be easily connected to the system hydraulics of the tractor. In this way, it is possible activating/disactivating the flotation means, by implementing different working configurations based upon the circumstances and upon the conditions occurring at time of the raking procedures.

Other advantages, features and use modes of the present invention will result evident from the following detailed description of some embodiments, shown by way of example and not for limitative purposes.

### Brief description of the figures

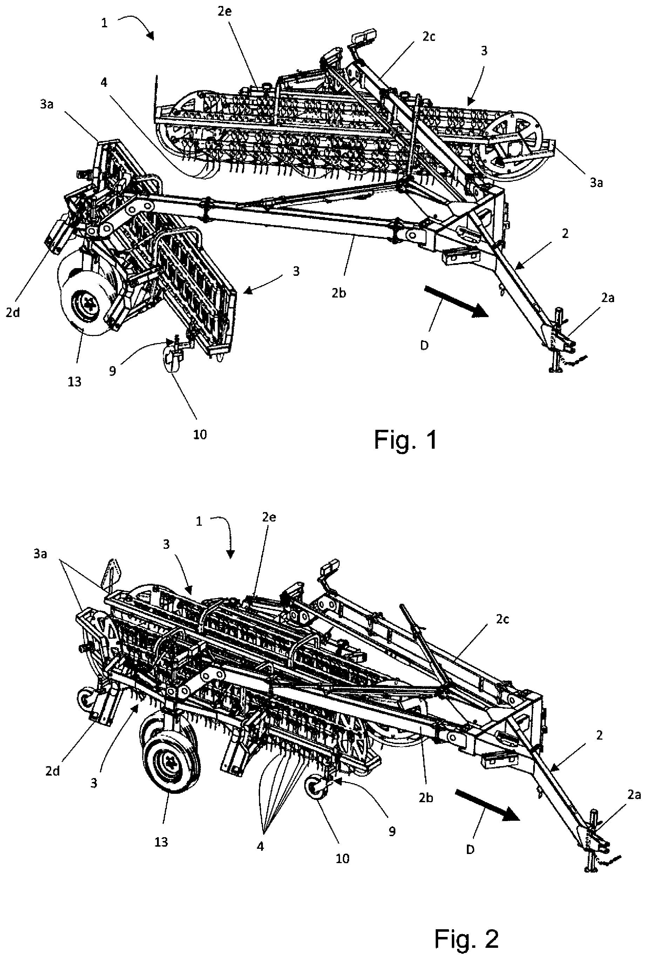

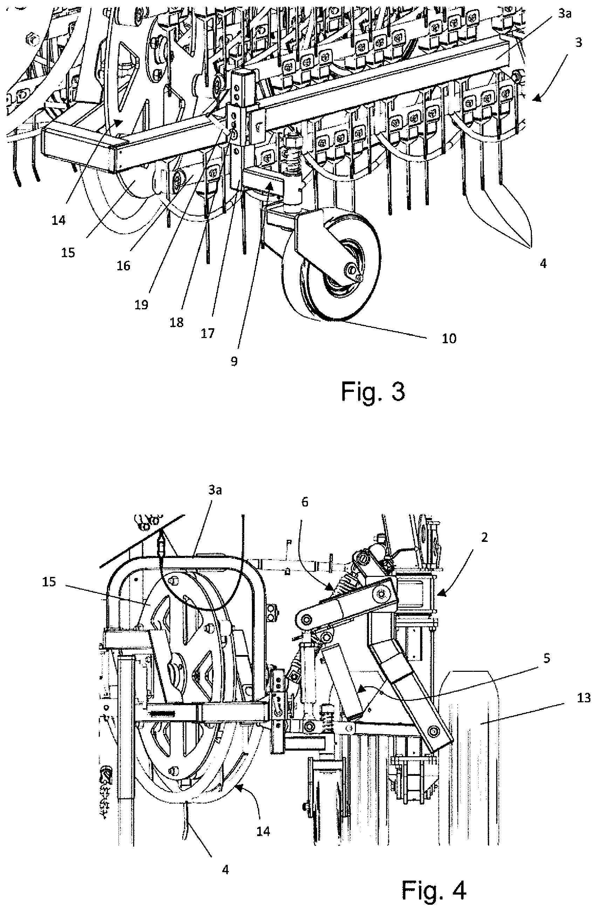

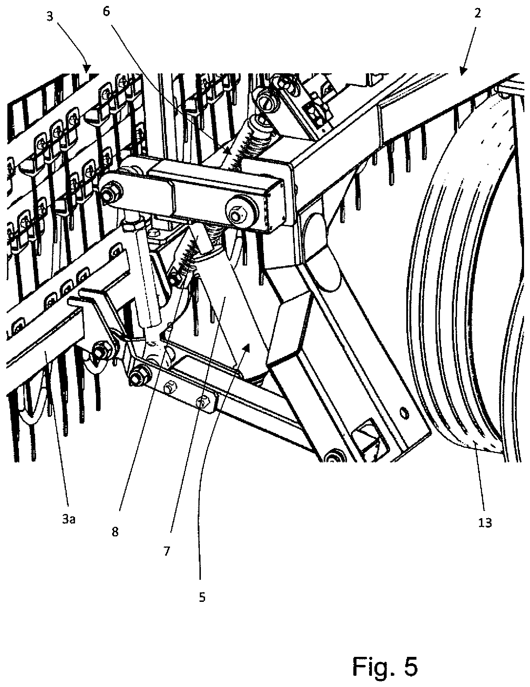

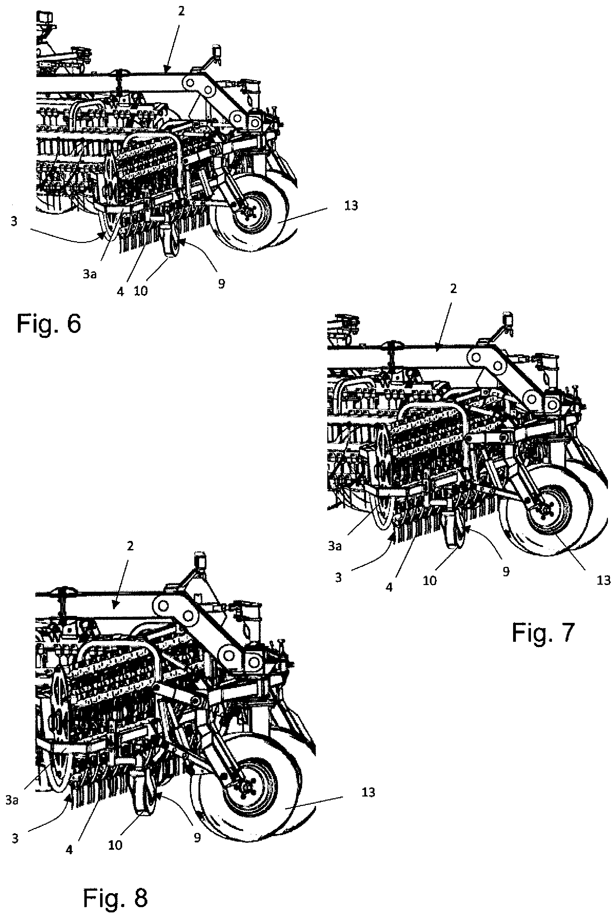

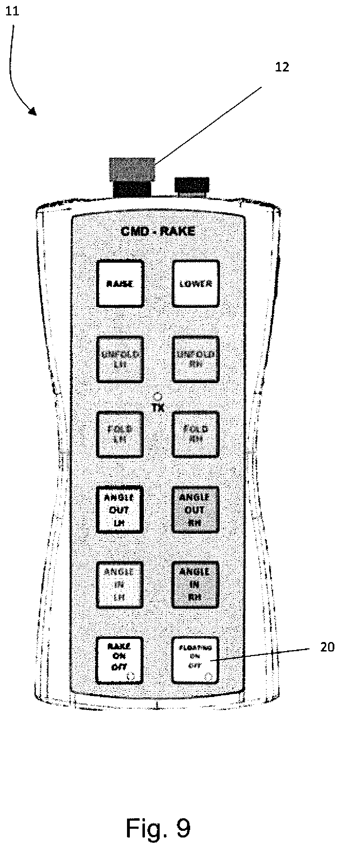

The figures of the enclosed drawings will be referred to, wherein:
▪ Figures 1 and 2 show an axonometric view of the machine in a preferred embodiment according to the present invention;
▪ Figures 3, 4 and 5 are axonometric views of details of the machine in a preferred embodiment according to the present invention;
▪ Figures 6, 7 and 8 are schematic views in axonometry of the operation of a detail of the machine according to the present invention;
▪ Figure 9 is a schematic view of a device of the machine according to the present invention.

The thicknesses and the bents represented in the above-illustrated figures are to be meant by way of example only, generally they are magnified and not necessarily shown in proportion.

### Detailed description of preferred embodiments

Embodiment and variants of the invention will be described hereinafter, and this with reference to the above-illustrated figures.

Analogous components are designated in the several figures with the same numeral reference.

In the following detailed description, additional embodiments and variants with respect to embodiments and variants already treated in the same description will be illustrated limited to the differences to what already illustrated.

Moreover, the several embodiments and variants described hereinafter are likely to be used in combination, if compatible.

By firstly referring to Figure 1, according to an embodiment of the invention an agricultural raking machine is designated as a whole with 1.

The machine 1 comprises a frame 2 configured to be towed by a towing vehicle, for example a tractor.

The frame 2 illustrated in figures is usefully provided with wheels 13 thereupon it rests to slide along a forwarding direction D.

Preferably, the frame 2 is provided with a rudder-like portion 2a configured to be connected to the towing vehicle.

By referring to figures, the frame 2 can include two arms 2b, 2c branching from the rudder-like portion 2a. The arms 2b and 2c are rotatable to one another, movable from a closing configuration (Figure 2) wherein they are substantially approached, to an opening configuration (Figure 1) wherein they are tilted to one another, converging towards the rudder-like portion 2a and defining an opening angle.

Usefully, the frame 2 can include even supports 2d and 2e, connected to the arms 2b and 2c, respectively.

The supports 2d and 2e preferably can be rotatable with respect to the arms 2b e 2c and they are rotatable independently from one another.

Alternative embodiments are not excluded, wherein the frame 2 has different shapes with respect to the one illustrated in figures.

Moreover, the machine 1 comprises at least a raking group 3 assembled on the frame 2. In particular, the raking group 3 is provided with rotating comb-like elements 4 apt to move material mowed onto the ground to form a windrow.

In the embodiment illustrated in figure, the machine 1 comprises two raking groups 3 carried by the respective arms 2b, 2c.

In particular, the raking groups 3 can be installed on each support 2d and 2e. Different embodiments from the illustrated one are not excluded, wherein there is a different number of raking groups 3.

Advantageously, the raking groups 3 can be tiltable with respect to the frame 2.

With reference to the illustrated embodiment, the raking groups 3 can move vertically, and then orthogonally to the forwarding direction D, with respect to the supports 2d, 2e.

Moreover, the raking groups 3, since they are connected to the supports 2d and 2e, can be tiltable with respect to the arms 2b, 2c.

Preferably, the raking groups are movable between a working configuration (Figure 1) and a rest configuration (Figure 2).

In the working configuration, the raking groups 3 can be tilted with respect to the frame 2. In particular, the raking groups 3 can be tilted with respect to the respective arms 2b, 2c so as to arrange on diverging lines with respect to the forwarding direction D.

On the contrary, in the rest configuration, the raking groups 3 can be arranged substantially parallel to the forwarding direction D. In particular, the raking groups 3 can be arranged substantially parallel to the rudder-like portion 2a. The latter, in fact, has a longitudinal development, the projection thereof on the ground extends substantially parallel to the forwarding direction D.

The raking groups, then, can be rotated and brought in position parallel to the rudder-like portion 2a and with a minimum angle with respect to the respective arms 2b, 2c so as to define a compact configuration together with the frame 2.

Preferably, the raking group 3 can include a stiff structure 3a carrying the comb-like elements 4. The stiff structure 3a, can be usefully implemented with rod-like elements defining an open cage inside thereof the comb-like elements 4 are assembled.

Independently from the shape and configuration of the stiff structure 3a, the comb-like elements 4 are assembled on a rotating portion 14 associated to the same stiff structure 3a.

The rotating portion 14 comprises tilted disks 15 therefrom rods 16 extend, thereon the comb-like elements 4 are fastened. In working configuration, the rotating disks 15 can rotate, by dragging in rotary motion the comb-like elements 4.

Raking groups different from the described ones are not excluded, for example wherein the comb-like elements are dragged in motion by structures having a different configuration than the above-described one.

Usefully, the stiff structure 3a can include at least an element 9 in contact with the ground having a contact end 10 intended to slide on the ground. The comb-like elements 4 can be placed at a predetermined height with respect to the contact end 10.

Usefully, the contact element 9 can have an adjustable height. In this way a user can set the distance of the comb-like elements 4 from the ground based upon several factors such as the type of material to be collected, the type of ground and other peculiarities linked to the geographical area and to the climatic conditions.

Advantageously, the contact element 9 is substantially stiff. In this way, the stresses and the pushes received from the ground by means of the contact end 10 are transferred stiffly to the stiff structure 3a.

By referring to the embodiment shown in figures, the contact end 10 can be the sliding surface of a small wheel assembled on the contact element 9.

Usefully, the contact element 9 can include a bar 17 provided with a series of vertical holes spaced apart therebetween. Moreover, the contact element 9 can include a ring 18 fastened to the stiff structure 3a, perforated too, wherein the bar 17 can slide. The stiff connection between the bar 17 and the ring 18 can be guaranteed by means of a pin 19. By extracting the pin 19, the bar 17 can be slid with respect to the ring 18 by adjusting, consequently, the height of the contact element 9 with respect to the stiff structure 3a.

The machine can further include flotation means 5, 6 associated to the raking group 3 and to the frame 2. The configuration is so that, at variations in height from the ground, the raking group 3 raises/lowers with respect to the frame 2. Thanks to the flotation means 5, 6, at asperities of the ground or obstacles, the raking group 3 can slide relatively in height with respect to the frame 2, by keeping the distance between the comb-like elements 4 and the substantially constant ground. In this way the collection of the material results to be more effective and the risk results reduced that the comb-like elements 4 are likely to impact obstacles or the ground itself.

Preferably, the flotation means 5, 6 includes at least a flotation device 5. The flotation device 5 can usefully comprise a fixed portion 7 and a sliding portion 8 associated to the fixed portion 7 so as to slide with respect thereto.

The fixed portion 7 can be fastened to the frame 2, preferably to the supports 2d and 2e, whereas the sliding portion 8 can be fastened to the raking group 3. The raking group 3, then, can raise/lower with respect to the frame 2 by means of relative motions of the sliding portion 8 with respect to the fixed portion 7.

Advantageously, the flotation device 5 is of the type of a hydraulic actuation device 5, but alternative flotation devices are not excluded, such as, for example, hydraulic, or pneumatic or electro-magnetic actuation devices.

The hydraulic actuation device 5 can be provided with a working fluid, for example hydraulic oil or another fluid usable under pressure and known in the state of art. Usefully, the hydraulic actuation device 5 can be movable between a floating configuration, wherein the working fluid is free to slide, and a locking configuration, wherein the working fluid is kept under pressure.

By referring to the present embodiment, the hydraulic actuation device 5 can include:
- as fixed portion 7, a cylinder fastened to the frame 2 and provided with means for inletting the working fluid;
- as movable portion 8, a piston fastened to the raking group 3 and at least partially inserted in the cylinder 7 to interfere with the working fluid.

In floating configuration, the piston 8 can slide in the cylinder 7.

In floating configuration, then, the raking group 3 can raise/lower with respect to the frame 2 by sliding the piston 8 in the cylinder 7.

In particular, at asperities of the ground or variations in the slope, the contact element 9, through the contact end 10, varies in height by dragging the stiff structure 3a and, then, the raking group 3. The variations in height of the raking group 3 are not transmitted to the frame 2 since the piston 8 can slide freely in the cylinder 7.

On the contrary, in locking configuration, the pressure of the working fluid prevents the piston 8 from sliding in the cylinder 7, and the hydraulic actuation device results to be locked.

In this case, the variations in height of the raking group 3 are transmitted even to the frame 2 since the cylinder 7 and the piston 8 result to be a substantially stiff connection between the raking group and the frame 2.

Solutions are not excluded providing a plurality of hydraulic actuation devices 5. Solutions are not excluded too, providing alternatives technically equivalent to the piston 8 and to the cylinder 7.

Advantageously, the flotation means 5, 6 can include at least a spring element 6 fastened to the frame 2 and to the raking group 3. The spring element 6 can exert an approaching force between the raking group 3 and the frame 2. The action of the spring element gives a greater sensitivity to the flotation means 5, 6 since the force required to push the raking group 3 and to overcome the resistances due to the weight result to be lower. The force exerted by the spring element 6 is subtracted from the weight of the raking group 3, therefore the latter will more likely raise from the ground at asperities, obstacles and slope variations.

By referring to the present embodiment, the spring element 6 can be fastened on one side to the frame 2, preferably to the supports 2d and 2e, on the other side to the stiff structure 3a.

Solutions are not excluded providing a plurality of spring elements 6 fastened to the frame 2 and to the raking group 3.

Solutions are not excluded too, providing alternatives technically equivalent to the spring elements 6.

By referring to the present embodiment, the machine 1 can include a hydraulic actuation group. The hydraulic actuation group, for example, can include an electro-hydraulic control unit provided with connecting tubes wherein a working fluid can slide, and electro-valves configured to adjust the fluid flow rate in the tubes.

The hydraulic actuation group, for the same of simplicity not illustrated in figures, can be connected to all portions of the machine 1 which require to be actuated, for example the arms 2b, 2c and the supports 2d, 2e of the frame 2, or the raking groups 3. In the latter case, the connection is configured both to tilt, raise and lower the raking groups 3 with respect to the supports 2d and 2e, and to actuate in rotation the comb-like elements 4.

Usefully, the hydraulic actuation group can be operatively connected to the raking group 3.

Moreover, the hydraulic actuation group can be operatively connected to the flotation means 5, 6 for their activation/deactivation. It is necessary to specify that terms "activation/deactivation" and similar, are referred to the flotation means 5, 6 to designate the passage from the locking configuration to the floating configuration (activation) and vice-versa (deactivation).

Advantageously, the machine 1 can include at least a control device 11 therewith a user can control the operation of the machine 1.

Usefully the control device 11 can be accessible to a user even when the machine is operating 1.

Preferably, the control device 11 is connected to the flotation means 5, 6 and configured to activate/deactivate hydraulically the same flotation means.

In particular, the control device 11 is connected to the hydraulic actuation device 5 and is configured to control the passage from the floating configuration to the locking configuration and vice-versa.

Advantageously, the control device 11 can include a switch element 20 operatively connected to the hydraulic actuation group for the selective actuation of the flotation means 5, 6, in particular for the activation/deactivation of the hydraulic actuation device 5.

The switch element 20 can be connected to the hydraulic actuation group so as to control the passage from the locking configuration to the floating configuration, for example by means of the electric control of an electro-valve operatively connected to the hydraulic actuation device 5.

Figure 9 illustrates by way of example a control device 11 comprising a grasping body 21 provided with a plurality of switches operatively connected to the hydraulic actuation group. Each switch is configured to control a procedure by means of the hydraulic actuation group. Each corresponding procedure is shown with alphanumeric wordings in the box of each switch. By way of example, the actions controlled by the switches and the relative alphanumeric codes are the following ones:
- *raise:* raising action of the raking group 3;
- *lower:* lowering action of the raking group 3;
- *unfold LH:* opening arm 2c (left);
- *unfold RH:* opening arm 2b (right);
- *fold LH:* closing arm 2c (left);
- *fold RH:* closing arm 2b (right);
- *angle out LH:* angular opening support 2e (left);
- *angle out RH:* angular opening support 2d (right);
- *angle in LH:* angular closing support 2e (left);
- *angle in RH:* angular closing support 2d (right);
- *rake on*/*off*: switch for actuating comb-like elements 4;
- *floating on*/*off:* switch for actuating flotation means 5, 6, in particular for actuating the hydraulic actuation device 5.

The control device 11 can be usefully configured to communicate electrically with the control unit of the actuating group, which, in turn, controls the electro-valves and the fluid flow rates required to perform the above-mentioned procedures.

For example, the control device 11 is configured to actuate the comb-like elements 4.

In particular, by pressing the switch *"rake on*/*off'* it is possible to put in rotation the comb-like elements 4.

Advantageously, the control device 11 can include control means operatively connected to the hydraulic actuation group and apt to adjust the operation of the same actuation group.

Preferably, the control means can include a flow rate adjustment element 12 operatively connected to the hydraulic actuation group. The adjustment element 12 is configured to adjust the flow rate of working fluid in the hydraulic actuation group. Usefully, the adjustment element 12 is configured to adjust the flow rate of the working fluid directed to the raking group 3 to actuate in rotation the comb-like elements.

In this way, a user can adjust the rotation speed of the comb-like elements 4 by means of the control device 11. Thanks to the remote control, the speed adjustment results simpler and it does not require direct interventions on the hydraulic actuation group, for example adjustments of valves to be done directly on the electro-hydraulic control unit.

Thanks to the adjustment element 12, then, it is possible to vary the speed during the collection procedures, without interrupting the work to be done, with consequent saving in time and resources.

Advantageously, the flow rate adjustment element 12 can be of the type of a potentiometer. By acting on the potentiometer, it is possible to vary the fluid flow rate supplied to the comb-like elements 4, by increasing or decreasing the rotation speed thereof.

Advantageously the flow rate adjustment element 12 can be manually actuated. In this way the user can adjust *live,* during the operation of the machine, the rotation speed of the combs depending upon the proceeding state of the raking procedures, by increasing or decreasing the speed based upon one's experience. Preferably, the potentiometer is of rotative type, so that the flow rate, ergo the rotation speed of the comb-like elements 4, varies depending upon a rotation of the adjustment element 12. Consequently, the adjustment results to be simple and intuitive for the user.

Alternative solutions are not excluded wherein, for example, the control device 11 comprises an electronic interface configured for a digital actuation of the switches and of the flow rate adjustment element 12.

An alternative embodiment, but compatible and combinable to the previously described one, provides a machine 1 wholly analogous to the above-described one. With respect to the latter, the control device 11 can be without an adjustment element 12 as previously described. In such case, both the actuation group, and the control device 11 itself result simpler to be constructed.

Other embodiments, compatible and combinable with the previously described ones, can provide control devices 11 comprising radiofrequency transmission means for remotely controlling the operation group.

The present invention has been sofar described with reference to preferred embodiments. It is to be meant that other embodiments may exist belonging to the protective scope of the herebelow reported claims.

## Claims

1. An agricultural raking machine (1) comprising
- a frame (2) configured to be towed by a towing vehicle;
- at least a raking group (3) assembled on said frame (2) and provided with rotating comb-like elements (4) apt to move material mowed onto the ground to form a windrow;
- flotation means (5, 6) associated to said raking group (3) and to said frame (2), the configuration being such that, at variations in height from the ground, said raking group (3) raises/lowers with respect to said frame (2), the agricultural machine (1) being **characterized in that** said flotation device (5) is of the type of a hydraulic actuation device (5) provided with a working fluid, said hydraulic actuation device (5) being movable between a floating configuration, said working fluid being free to slide, and a locking configuration, said working fluid being kept in pressure, and
wherein said hydraulic actuation device (5) comprises
- a cylinder (7) fastened to said frame (2) and provided with means for inletting said working fluid;
- a piston (8) fastened to said raking group and at least partially inserted in said cylinder to interfere with said working fluid;
in said floating configuration, said piston (8) being able to slide in said cylinder (7).

2. The machine (1) according to claim 1, wherein said flotation means (5, 6) comprises at least a flotation device (5) comprising a fixed portion (7) and a sliding portion (8) associated to said fixed portion (7).

3. The machine (1) according to anyone of the preceding claims, wherein said flotation means (5, 6) comprises at least a spring element (6) fastened to said frame (2) and to said raking group (3) and exerting an approaching force between said spring element (6) and said frame (2).

4. The machine (1) according to one or more of the preceding claims, wherein said raking group (3) comprises a stiff structure (3a) carrying said comb-like elements (4).

5. The machine (1) according to claim 4, wherein said stiff structure (3a) comprises at least a contact element (9) in contact with the ground having a contact end (10) intended to slide on the ground, said comb-like elements (4) being placed at a predetermined height with respect to said contact end (10).

6. The machine (1) according to claim 5, wherein said contact element (9) has adjustable height.

7. The machine (1) according to claim 5 or 6, wherein said contact element (9) is substantially stiff.

8. The machine (1) according to one or more of the preceding claims, comprising at least a control device (11) connected to said flotation means (5, 6) and configured to activate/deactivate hydraulically said flotation means.

9. The machine (1) according to one or more of the preceding claims, comprising a hydraulic actuation group operatively connected to at least said raking group (3) and connected to said flotation means (5, 6).

10. The machine (1) according to one or more of the preceding claims, wherein said control device (11) comprises at least a switch element (20) operatively connected to said hydraulic actuation group for the selective actuation of said flotation means (5, 6)

11. The machine (1) according to one or more of the preceding claims, comprising a control device (11) operatively connected to said raking group (3) and configured to adjust the rotation speed of said comb-like elements (4).

12. The machine (1) according to the preceding claim, wherein said hydraulic actuation group operatively connected to at least said raking group (3) and configured to put in rotation said comb-like elements (4), said control device (11) comprising control means operatively connected to said hydraulic actuation group.

13. The machine (1) according to the preceding claim, wherein said control means comprises a flow rate adjustment element (12) operatively connected to said hydraulic actuation group to adjust the flow rate of a working fluid in said hydraulic actuation group.

14. The machine (1) according to the preceding claim, wherein said flow rate adjustment element (12) is of the type of a potentiometer.

15. The machine (1) according to one or more of the preceding claims, wherein said flow rate adjustment element (12) is manually actuated.

## Patentansprüche

1. Landwirtschaftliche Rechenmaschine (1), umfassend
- einen Rahmen (2), der konfiguriert ist, um durch eine Zugmaschine gezogen zu werden;
- mindestens eine Rechengruppe (3), die auf dem Rahmen (2) montiert ist und mit rotierenden kammartigen Elementen (4) bereitgestellt ist, die geeignet sind, gemähtes Material auf den Boden zu bewegen, um eine Schwade auszubilden;
- ein Schwimmmittel (5, 6), das mit der Rechengruppe (3) und mit dem Rahmen (2) verknüpft ist, wobei die Konfiguration derart ist, dass sich die Rechengruppe (3) bei Höhenunterschieden von dem Boden in Bezug auf den Rahmen (2) hebt/senkt,
wobei die landwirtschaftliche Maschine (1)
**dadurch gekennzeichnet ist, dass** die Schwimmvorrichtung (5) von dem Typ einer hydraulischen Betätigungsvorrichtung (5) ist, der ein Arbeitsfluid bereitgestellt wird, wobei die hydraulische Betätigungsvorrichtung (5) zwischen einer Schwimmkonfiguration, in der das Arbeitsfluid frei ist, um zu gleiten, und einer Verriegelungskonfiguration bewegbar ist, in der das Arbeitsfluid unter Druck gehalten wird, und wobei die hydraulische Betätigungsvorrichtung (5) umfasst
- einen Zylinder (7), der an dem Rahmen (2) befestigt ist und mit einem Mittel zum Einlassen des Arbeitsfluids bereitgestellt ist;
- einen Kolben (8), der an der Rechengruppe befestigt ist und mindestens teilweise in den Zylinder eingesetzt ist, um das Arbeitsfluid zu beeinträchtigen;
in der Schwimmkonfiguration der Kolben (8) in der Lage ist, in dem Zylinder (7) zu gleiten.

2. Maschine (1) nach Anspruch 1, wobei das Schwimmmittel (5, 6) mindestens eine Schwimmvorrichtung (5) umfasst, umfassend einen fixierten Abschnitt (7) und einen gleitenden Abschnitt (8), der mit dem fixierten Abschnitt (7) verknüpft ist.

3. Maschine (1) nach einem der vorstehenden Ansprüche, wobei das Schwimmmittel (5, 6) mindestens ein Federelement (6) umfasst, das an dem Rahmen (2) und an der Rechengruppe (3) befestigt ist und eine Annäherungskraft zwischen dem Federelement (6) und dem Rahmen (2) ausübt.

4. Maschine (1) nach einem oder mehreren der vorstehenden Ansprüche, wobei die Rechengruppe (3) eine steife Struktur (3a) umfasst, die die kammartigen Elemente (4) trägt.

5. Maschine (1) nach Anspruch 4, wobei die steife Struktur (3a) mindestens ein Kontaktelement (9) in Kontakt mit dem Boden aufweist, das ein Kontaktende (10) aufweist, das vorgesehen ist, um auf dem Boden zu gleiten, wobei die kammartigen Elemente (4) in einer zuvor bestimmten Höhe in Bezug auf das Kontaktende (10) platziert sind.

6. Maschine (1) nach Anspruch 5, wobei das Kontaktelement (9) eine einstellbare Höhe aufweist.

7. Maschine (1) nach Anspruch 5 oder 6, wobei das Kontaktelement (9) im Wesentlichen steif ist.

8. Maschine (1) nach einem oder mehreren der vorstehenden Ansprüche, umfassend mindestens eine Steuervorrichtung (11), die mit dem Schwimmmittel (5, 6) verbunden ist und konfiguriert ist, um das Schwimmmittel hydraulisch zu aktivieren/deaktivieren.

9. Maschine (1) nach einem oder mehreren der vorstehenden Ansprüche, umfassend eine hydraulische Betätigungsgruppe, die mindestens mit der Rechengruppe (3) wirkverbunden und mit dem Schwimmmittel (5, 6) verbunden ist.

10. Maschine (1) nach einem oder mehreren der vorstehenden Ansprüche, wobei die Steuervorrichtung (11) mindestens ein Schaltelement (20), das mit der hydraulischen Betätigungsgruppe wirkverbunden ist, für die selektive Betätigung des Schwimmmittels (5, 6) umfasst.

11. Maschine (1) nach einem oder mehreren der vorstehenden Ansprüche, umfassend eine Steuervorrichtung (11), die mit der Rechengruppe (3) wirkverbunden ist und konfiguriert ist, um die Rotationsgeschwindigkeit der kammartigen Elemente (4) einzustellen.

12. Maschine (1) nach dem vorstehenden Anspruch, wobei die hydraulische Betätigungsgruppe mit mindestens der Rechengruppe (3) wirkverbunden ist und konfiguriert ist, um die kammartigen Elemente (4) in Rotation zu versetzen, die Steuervorrichtung (11) umfassend ein Steuermittel, das mit der hydraulischen Betätigungsgruppe wirkverbunden ist.

13. Maschine (1) nach dem vorstehenden Anspruch, wobei das Steuermittel ein Durchflussmengeneinstellelement (12) umfasst, das mit der hydraulischen Betätigungsgruppe wirkverbunden ist, um die Durchflussmenge eines Arbeitsfluids in der hydraulischen Betätigungsgruppe einzustellen.

14. Maschine (1) nach dem vorstehenden Anspruch, wobei das Durchflussmengeneinstellelement (12) von der Art eines Potentiometers ist.

15. Maschine (1) nach einem oder mehreren der vorstehenden Ansprüche, wobei das Durchflussmengeneinstellelement (12) manuell betätigt wird.

## Revendications

1. Machine agricole andaineuse (1) comprenant
- un cadre (2) conçu pour être remorqué par un véhicule tracteur ;
- au moins un groupe andaineur (3) assemblé sur ledit cadre (2) et pourvu d'éléments rotatifs en forme de peigne (4) aptes à déplacer la matière fauchée sur le sol pour former un andain ;
- des moyens de flottaison (5, 6) associés audit groupe andaineur (3) et audit cadre (2), la configuration étant telle que, lors de variations de hauteur par rapport au sol, ledit groupe andaineur (3) se soulève/s'abaisse par rapport audit cadre (2),
la machine agricole (1) étant **caractérisée en ce que** ledit dispositif de flottaison (5) est du type d'un dispositif d'actionnement hydraulique (5) pourvu d'un fluide de travail, ledit dispositif d'actionnement hydraulique (5) étant mobile entre une configuration flottante, ledit fluide de travail étant libre de glisser, et une configuration de verrouillage, ledit fluide de travail étant maintenu sous pression, et dans lequel ledit dispositif d'actionnement hydraulique (5) comprend
- un cylindre (7) fixé audit cadre (2) et pourvu d'un moyen d'admission dudit fluide de travail ;
- un piston (8) fixé audit groupe andaineur et au moins partiellement inséré dans ledit cylindre pour interférer avec ledit fluide de travail ;
dans ladite configuration flottante, ledit piston (8) pouvant glisser dans ledit cylindre (7).

2. Machine (1) selon la revendication 1, dans laquelle lesdits moyens de flottaison (5, 6) comprennent au moins un dispositif de flottaison (5) comprenant une partie fixe (7) et une partie glissante (8) associée à ladite partie fixe (7).

3. Machine (1) selon l'une quelconque des revendications précédentes, dans laquelle lesdits moyens de flottaison (5, 6) comprennent au moins un élément à ressort (6) fixé audit cadre (2) et audit groupe andaineur (3) et exerçant une force d'approche entre ledit élément à ressort (6) et ledit cadre (2).

4. Machine (1) selon l'une ou plusieurs des revendications précédentes, dans laquelle ledit groupe andaineur (3) comprend une structure rigide (3a) portant lesdits éléments en forme de peigne (4).

5. Machine (1) selon la revendication 4, dans laquelle ladite structure rigide (3a) comprend au moins un élément de contact (9) en contact avec le sol ayant une extrémité de contact (10) destinée à glisser sur le sol, lesdits éléments de type peigne (4) étant placés à une hauteur prédéterminée par rapport à ladite extrémité de contact (10).

6. Machine (1) selon la revendication 5, dans laquelle ledit élément de contact (9) a une hauteur réglable.

7. Machine (1) selon la revendication 5 ou 6, dans laquelle ledit élément de contact (9) est sensiblement rigide.

8. Machine (1) selon l'une ou plusieurs des revendications précédentes, comprenant au moins un dispositif de commande (11) connecté auxdits moyens de flottaison (5, 6) et configuré pour activer/désactiver hydrauliquement lesdits moyens de flottaison.

9. Machine (1) selon l'une ou plusieurs des revendications précédentes, comprenant un groupe d'actionnement hydraulique relié de manière fonctionnelle à au moins ledit groupe andaineur (3) et relié auxdits moyens de flottaison (5, 6).

10. Machine (1) selon l'une ou plusieurs des revendications précédentes, dans laquelle ledit dispositif de commande (11) comprend au moins un élément de commutation (20) relié de manière fonctionnelle audit groupe d'actionnement hydraulique pour l'actionnement sélectif desdits moyens de flottaison (5, 6)

11. Machine (1) selon l'une ou plusieurs des revendications précédentes, comprenant un dispositif de commande (11) connecté de manière opérationnelle audit groupe andaineur (3) et configuré pour régler la vitesse de rotation desdits éléments en forme de peigne (4).

12. Machine (1) selon la revendication précédente, dans laquelle ledit groupe d'actionnement hydraulique est relié de manière fonctionnelle à au moins ledit groupe andaineur (3) et conçu pour mettre en rotation lesdits éléments en forme de peigne (4), ledit dispositif de commande (11) comprenant un moyen de commande connecté de manière opérationnelle audit groupe d'actionnement hydraulique.

13. Machine (1) selon la revendication précédente, dans laquelle ledit moyen de commande comprend un élément de réglage de débit (12) connecté de manière opérationnelle audit groupe d'actionnement hydraulique pour régler le débit d'un fluide de travail dans ledit groupe d'actionnement hydraulique.

14. Machine (1) selon la revendication précédente, dans laquelle ledit élément de réglage de débit (12) est du type potentiomètre.

15. Machine (1) selon l'une ou plusieurs des revendications précédentes, dans laquelle ledit élément de réglage de débit (12) est actionné manuellement.
